# EUROPEAN PATENT APPLICATION

(11) **EP 4 745 764 A1**
(43) Date of publication of application: **20.05.2026**
(21) Application number: 24383246.6
(22) Date of filing: 15.11.2024
(51) Int. Cl.: G06F 9/30

(54) **PERFORMING A COMPUTER INSTRUCTION OF MATRIX MULTIPLICATION**

(71) Applicant: Semidynamics Technology Services, S.L., 08021 Barcelona (ES)
(72) Inventor: ARNAU MONTAÑÉS, José María, 08021 BARCELONA (ES); MARCUELLO PASCUAL, Pedro, 08020 BARCELONA (ES); MOYA DEL BARRIO, Victor, 08914 BADALONA (ES); ESPASA SANS, Roger, 08021 BARCELONA (ES)
(74) Representative: ZBM Patents - Zea, Barlocci & Markvardsen

(57) **Abstract**

Methods of performing matrix multiplication instruction in a processor having control register and vector registers whose length is indicated in the control register, the matrix multiplication being A×B=C, wherein A is an M×K matrix of elements with bitwidth-1, B is a K×N matrix of components with bitwidth-2, and C is an M×N matrix of items with bitwidth-3. The instruction codifies a multiplication type to be performed and has parameter-1, parameter-2 and parameter-3 indicating in which vector registers the elements, components and items are sequentially stored, respectively. Such methods comprise performing, in runtime, following steps: obtaining length from control register; decoding instruction to obtain multiplication type; determining bitwidth-1 and bitwidth-2 depending on multiplication type; determining value of M, N and K depending on the length and bitwidth-1 and bitwidth-2; and performing the matrix multiplication taking into account parameter-1, parameter-2 and parameter-3, bitwidth-1 and bitwidth-2, and value of M, N and K.

## Description

This disclosure relates to computer-implemented methods of performing a computer instruction of multiplying first matrix and second matrix, and to computer programs and systems suitable to perform such computer-implemented methods.

### BACKGROUND

It is known that matrix multiplication is a type of operation widely used in a diversity of computer-based applications related to, e.g., robotics, computer graphics, image and signal processing, Artificial Intelligence (Al) and Machine Learning (ML), etc. For instance, Al and ML have become ubiquitous in recent years in any kind of computing device. Modern ML models consist of hundreds of convolutional or fully-connected layers, which can be efficiently implemented as a matrix multiplication. In order to achieve the demanding performance targets of large ML models, computer architectures have added instructions to efficiently process matrices.

Processor architectures are known including vector registers and supporting a diversity of data types along with functions to access/address and process them. An example of said architectures is RISC-V which is an open standard Instruction Set Architecture (ISA) that can be freely used. It is a clean and modern ISA that is easy to extend and provides a solid foundation for building processors. Due to its flexibility, it has become a popular ISA for many applications.

Nowadays, it is a desire and challenge to improve the performing of matrix multiplications in processors of any type that are usable to implement computer-based solutions relying on multiplications of matrices. Said computer-based solutions may perform more efficiently and be more powerful proportionally to any kind of efficiency gain in the performing of matrix multiplications. The more efficient the computing of matrix multiplications, the more efficient and powerful the applications relying on said computations.

It is thus an object of the present disclosure to provide new methods, systems and computer programs aimed at improving current ways of performing a computer instruction of matrix multiplication.

### SUMMARY

In a first aspect, computer-implemented methods are provided of performing a computer instruction of multiplying first matrix and second matrix in a processor having an architecture including a set or array of vector registers and a first control register, each of the vector registers having a vector length indicated in the first control register. The first matrix is made up of first numerical elements with first bitwidth arranged in M rows and K columns, the second matrix is made up of second numerical elements with second bitwidth arranged in K rows and N columns, and a third matrix resulting from the multiplying of the first and second matrices is made up of third numerical elements with third bitwidth arranged in M rows and N columns. The computer instruction (also denominated matrix-multiplication instruction herein) codifies an operation code indicating a type of the multiplying to be performed and has first, second and third matrix parameters. The first matrix parameter indicates in which vector registers the first numerical elements are sequentially stored. The second matrix parameter indicates in which vector registers the second numerical elements are sequentially stored. The third matrix parameter indicates in which vector registers the (result) third numerical elements are (or are to be) sequentially stored.

These computer-implemented methods (also denominated matrix-multiplication methods herein) comprise obtaining, in runtime, the vector length from the first control register, and decoding, in runtime, the computer instruction to obtain the operation code codified therein and, therefore, the type of the multiplying to be performed. Such matrix-multiplication methods further comprise determining, in runtime, the first and second bitwidths depending on the obtained type of the multiplying to be performed, and determining, in runtime, value of M, value of N and value of K depending on the obtained vector length and the determined first and second bitwidths. These matrix-multiplication methods still further comprise performing, in runtime, multiplication of the first and second matrices taking into account the first, second and third matrix parameters, the determined first and second bitwidths, and the determined value of M, value of N and value of K.

Once first, second and third matrix parameters (i.e., where matrices involved are located in vector registers), first and second bitwidths (i.e., lengths of bit blocks to be accessed/addressed, corresponding to elements of the matrices involved), and value of M, N and K (i.e., dimensions of the matrices involved) are available, the multiplication of the first and second matrices may be performed in any known manner based on said available data. Since matrix multiplication algorithms and how they may be implemented are well-known matters in the technical filed at hand, no details thereon are provided herein. Somewhere in this disclosure, it is provided a particular manner of doing so via **Source code 1,** merely for reasons of completeness.

The matrix-multiplication methods proposed herein provide an efficient implementation for matrix multiplication, which is an essential kernel in many modern computer-based applications. Efficiency comes from, among other things, that pre-existing vector registers are used to store matrices involved, so no new architecturally visible state is required. This means that existing tools and Operating Systems for the processor architecture employed (e.g., RISC-V architecture) work out of the box without requiring any changes. Furthermore, it may support a wide variety of data types.

In some examples, the architecture may be RISC-V architecture. In this case, the set or array of vector registers may be the Vector Register File, VRF, of the RISC-V architecture, and the first control register may be the Vector Length Register, VLEN, of the RISC-V architecture. Other processor architectures in which matrix-multiplication methods according to present disclosure are performable may be, e.g., x86, ARM, MIPS, etc.

According to implementations, the architecture may further include a second control register, so that the operation code (opcode) indicating the type of the multiplying to be performed may be encoded in combination by the computer instruction (or name or format thereof) and part or full content of said second control register. In these implementations, the type of the multiplying to be performed may thus be determined by decoding, in runtime, the computer instruction along with the part or full content of the second control register to obtain the operation code codified therein. This manner, in case the instruction's name or format alone cannot encode all desired types of the matrix multiplication to be performed, an extended opcode range may be defined with the combination of the instruction's name or format and the part or full content of the second control register.

In RISC-V based implementations, this second control register may be the vector type register (vtype) of the RISC-V architecture. In particular, three bits in vtype[5:3] may indicate whether the first and second bitwidths are of 16 bits or of 8 bits which, in combination with the instruction's name or format, may encode a range of opcodes broader than the limited opcodes encodable by only the instruction's name or format. Other bits in vtype such as, e.g., one bit in vtype[10] may indicate a number type of the first and the second numerical elements, e.g., brain floating point (BF16) or IEEE 754 16-bit floating point (FP16), so that opcodes encodable by only the instruction's name or format are extended thanks to further information provided by said one bit in vtype[10]. Details on how instruction's name/format and full or partial content of the second control register (e.g., vtype) may be combined to encode opcode range in extended manner are provided in other parts of the disclosure with reference to, e.g.,

### Table 2.

The first matrix parameter may indicate a first initial vector register of a first series of contiguous vector registers in which the first numerical elements are sequentially stored starting from said first initial vector register. The second matrix parameter may indicate a second initial vector register of a second series of contiguous vector registers in which the second numerical elements are sequentially stored starting from said second initial vector register. The third matrix parameter may indicate a third initial vector register of a third series of contiguous vector registers in which the third numerical elements are (or are to be) sequentially stored starting from said third initial vector register.

In some implementations, the first and second bitwidths may be same bitwidth equal to 4 bits or equal to 8 bits or equal to 16 bits depending on the obtained opcode or type of the multiplying to be performed. In examples, the third bitwidth may be of 32 bits which may, e.g., correspond to one of following numerical representations depending on the obtained opcode or type of the multiplying to be performed: 32 bits floating point, FP32, 32 bits signed integer, INT32, 32 bits unsigned integer, UINT32.

In case of the first and second bitwidths are of 16 bits, said 16 bits may correspond to one of following numerical representations depending on the obtained opcode or type of the multiplying to be performed:
- 16 bits floating point, FP16, for both the first numerical elements and the second numerical elements;
- 16 bits brain floating point, BF16, for both the first numerical elements and the second numerical elements;
- 16 bits signed integer, INT16, for both the first numerical elements and the second numerical elements;
- 16 bits unsigned integer, UINT16, for both the first numerical elements and the second numerical elements;
- 16 bits signed integer, INT16, for the first numerical elements and 16 bits unsigned integer, UINT16, for the second numerical elements.

In case of the first and second bitwidths are of 8 bits, said 8 bits may correspond to one of following numerical representations depending on the obtained opcode or type of the multiplying to be performed:
- 8 bits signed integer, INT8, for both the first numerical elements and the second numerical elements;
- 8 bits unsigned integer, UINT8, for both the first numerical elements and the second numerical elements;
- 8 bits signed integer, INT8, for the first numerical elements and 8 bits unsigned integer, UINT8, for the second numerical elements.

In case of the first and second bitwidths are of 4 bits, said 4 bits may correspond to one of following numerical representations depending on the obtained opcode or type of the multiplying to be performed:
- 4 bits signed integer, INT4, for both the first numerical elements and the second numerical elements;
- 4 bits unsigned integer, UINT4, for both the first numerical elements and the second numerical elements;
- 4 bits signed integer, INT4, for the first numerical elements and 4 bits unsigned integer, UINT4, for the second numerical elements.

Details on possible different variants or types of matrix multiplications performable by matrix-multiplication methods according to present disclosure are provided somewhere in this description, in particular, regarding **Table 2,** said variants including combinations of the aforementioned number types: FP16, BF16, INT16, UINT16, or INT8, UINT8, or INT4, UINT4 for both the first and second number elements, and FP32, INT32, UINT32 for the (result) third number elements.

In examples of matrix-multiplication methods, the value of M and the value of N may be determined, in runtime, only depending on the obtained vector length, and the value of K may be determined, in runtime, also depending on the obtained vector length and furthermore on the determined first and second bitwidths.

According to some examples, the determining of the value of K depending on the obtained vector length and the determined first and second bitwidths may comprise establishing (in runtime) a working bitwidth of 16 bits, determining (in runtime) a working K depending on the obtained vector length and the established working bitwidth, and determining (in runtime) the value of K depending on the determined working K and the determined first and second bitwidths. In particular, the value of K may be set, in runtime, equal to the determined working K if the determined first and second bitwidths are of 16 bits, or equal to the determined working K multiplied by 2 if the determined first and second bitwidths are of 8 bits, or equal to the determined working K multiplied by 4 if the determined first and second bitwidths are of 4 bits.

In some configurations, the processor may support a function of addressing (or handling) bit packets of 8 bits or of 16 bits but not of 4 bits in the vector registers. Taking this into account, the performing of the multiplication of the first and second matrices may include accessing, in runtime, the first and second numerical elements to be processed to perform the multiplication through the addressing function in direct mode if the first and second bitwidths are of 8 bits or of 16 bits, or in indirect mode if the first and second bitwidths are of 4 bits. The direct mode may include using, for each of the numerical elements of 8 bits or of 16 bits to be processed, the addressing function to access it with no access-related post-processing thereof. The indirect mode may include using, for each of the numerical elements of 4 bits to be processed, the addressing function to access bit packet of 8 bits including it along with access-related post-processing of the accessed/addressed bit packet of 8 bits to identify the 4 MSBs (most significant bits) or 4 LSBs (less significant bits) therein as the numerical element of 4 bits to be processed.

In some implementations, the first matrix may be a sub-matrix of a first full matrix made up of various sub-matrices including said first sub-matrix, and the second matrix may be a sub-matrix of a second full matrix made up of various sub-matrices including said second sub-matrix, so that some matrix-multiplication methods according to present disclosure may correspond to sub-matrix multiplication cumulative methods. These methods with accumulation may include accumulating, in runtime, the multiplication of the first and second sub-matrices in the (result) third matrix as partial result of multiplying the first and second full matrices. Therefore, multiplication of the first and second full matrices is performable by executing one of these sub-matrix-multiplication cumulative methods as many times as required depending on the different sub-matrices into which the first and second full matrices are dividable or separable or splitable.

In a further aspect, computer programs are provided comprising program instructions for causing a processor system to perform any of the matrix-multiplication methods disclosed herein. Said computer programs (also denominated matrix-multiplication computer programs herein) may be embodied on a storage medium and/or carried on a carrier signal. Matrix-multiplication computer programs are suitable for performing matrix-multiplication methods such as those described in other parts of the disclosure. Hence, aspects of said matrix-multiplication methods such as, e.g., functional, structural, advantageous considerations, may be similarly attributable to matrix-multiplication computer programs.

In a still further aspect, systems are provided for performing a computer instruction of multiplying first matrix and second matrix in a processor having an architecture including a set or array of vector registers and a first control register, each of the vector registers having a vector length indicated in the first control register. The first matrix is made up of first numerical elements with first bitwidth arranged in M rows and K columns, the second matrix is made up of second numerical elements with second bitwidth arranged in K rows and N columns, and a third matrix resulting from the multiplying of the first and second matrices is made up of third numerical elements with third bitwidth arranged in M rows and N columns. The computer instruction codifies an operation code indicating a type of the multiplying to be performed and has first, second and third matrix parameters. The first matrix parameter indicates in which vector registers the first numerical elements are sequentially stored. The second matrix parameter indicates in which vector registers the second numerical elements are sequentially stored. The third matrix parameter indicates in which vector registers the (result) third numerical elements are (or are to be) sequentially stored.

Such systems (also denominated matrix-multiplication systems herein) comprise a length module, a decoding module, a bitwidth module, a dimension module and a multiplication module. The length module is configured to obtain, in runtime, the vector length from the first control register. The decoding module is configured to decode, in runtime, the computer instruction to obtain the operation code codified therein and, therefore, the type of the multiplying to be performed. The bitwidth module is configured to determine, in runtime, the first and second bitwidths depending on the obtained type of the multiplying to be performed. The dimension module is configured to determine, in runtime, value of M, value of N and value of K depending on the obtained vector length and the determined first and second bitwidths. The multiplication module is configured to perform, in runtime, multiplication of the first and second matrices taking into account the first matrix parameter, the second matrix parameter, the third matrix parameter, the determined first and second bitwidths, and the determined value of M, value of N and value of K. These matrix-multiplication systems are suitable for performing matrix-multiplication methods such as those described in other parts of the disclosure. Hence, aspects of said matrix-multiplication methods such as, e.g., functional, structural, advantageous considerations, may be similarly attributable to matrix-multiplication systems.

In a yet further aspect, processor systems are provided having an architecture with a set/array of vector registers and one or more control registers, each of the vector registers having a vector length indicated in one of the control registers, and including any of matrix-multiplication systems or computer programs according to present disclosure (or a combination thereof) embedded in the processor system.

### BRIEF DESCRIPTION OF THE DRAWINGS

Non-limiting examples of present disclosure will be described in the following, with reference to the appended drawings, in which:
Figure 1 is a block diagram schematically illustrating systems for performing a computer instruction of multiplying first matrix and second matrix, according to examples.
Figure 2 is a flow chart schematically illustrating computer-implemented methods of performing a computer instruction of multiplying first matrix and second matrix, according to examples.

### DETAILED DESCRIPTION OF EXAMPLES

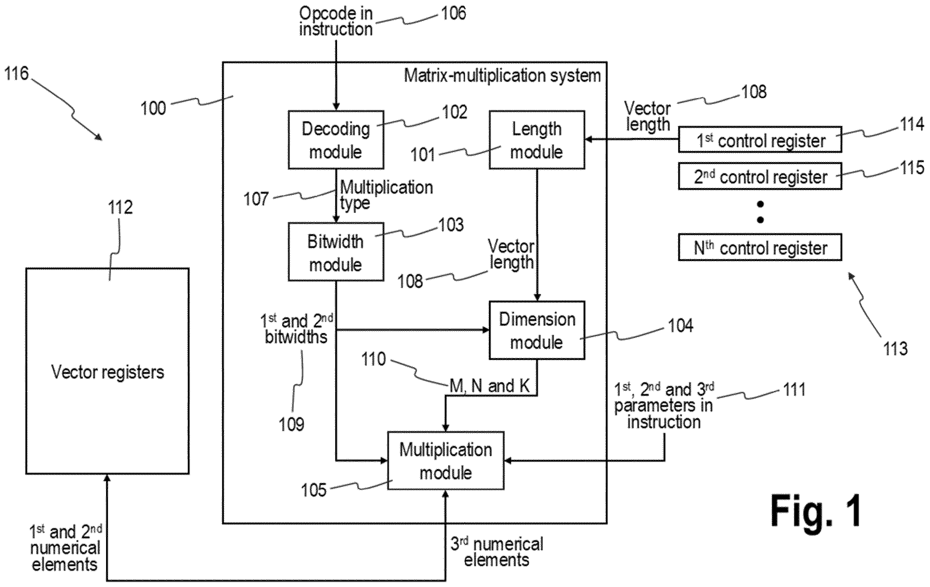

Figure 1 is a block diagram schematically illustrating systems 100 for performing a computer instruction of multiplying first matrix and second matrix, according to examples. This computer instruction may be also denominated matrix-multiplication instruction herein. Matrix-multiplication systems 100 may be included and, therefore, may operate in a processor 116 having an architecture including a set or array of vector registers 112 and a first Control Register 114. Each of said vector registers 112 may have a vector length 108 indicated by the content of the first Control Register 114. The architecture may be any processor architecture upon which matrix-multiplication methods according to present disclosure are implementable and performable such as, e.g., RISC-V, x86, ARM, MIPS, etc. In RISC-V implementations, the set or array of vector registers 112 may be the Vector Register File (VRF) of the RISC-V architecture, and the first Control Register 114 may be the Vector Length Register (VLEN) of the RISC-V architecture.

The first matrix may be constituted by first number elements arranged in M rows and K columns. Each of said first number elements may have first bitwidth. The second matrix may be constituted by second number elements arranged in K rows and N columns. Each of said second number elements may have second bitwidth. A third matrix resulting or to be resulted from the multiplying of the first and second matrices may be constituted by third number elements arranged in M rows and N columns. Each of said third number elements may have third bitwidth. The first bitwidth and the second bitwidth may be the same bitwidth such as, e.g., 16 bits or 8 bits or 4 bits. The third bitwidth may be of 32 bits which is, in principle, sufficiently large regarding aim of overflow prevention.

The matrix-multiplication instruction (to be performed) may encode an operation code (opcode) indicating a type of the matrix-multiplication to be performed and may have first, second and third matrix parameters. First matrix parameter may indicate in which of the vector registers 112 the first number elements are sequentially stored. For example, the first matrix parameter may indicate a first initial vector register of a first series of contiguous vector registers (in the array of vector registers 112) where the first number elements are sequentially stored starting from said first initial vector register. Second matrix parameter may indicate in which of the vector registers 112 the second number elements are sequentially stored. For example, the second matrix parameter may indicate a second initial vector register of a second series of contiguous vector registers (in the array of vector registers 112) where the second number elements are sequentially stored starting from said second initial vector register. Third matrix parameter may indicate in which of the vector registers 112 the third number elements are (or are to be) sequentially stored. For example, the third matrix parameter may indicate a third initial vector register of a third series of contiguous vector registers (in the array of vector registers 112) where the third number elements are (or are to be) sequentially stored starting from said third initial vector register.

Matrix-multiplication methods may be triggered during execution of an application program in response to a call, included in said application program, invoking the performing of the matrix-multiplication instruction. Prior to said call, the application program may have generated necessary execution pre-conditions enabling the performing of the matrix-multiplication instruction. Generation of said execution pre-conditions may include, e.g., provision of the vector length 108 to the first Control Register 114, load of the first matrix into required or desired vector registers 112, load of the second matrix into required or desired vector registers 112, reservation of required/desired vector registers 112 to accommodate the third matrix (i.e., result of the matrix multiplication), etc. Once this execution pre-conditions have been created by the running application program, the call to the matrix-multiplication instruction may be triggered for it to perform the multiplication of the first and second matrices. This call may have been programmed in the application program with proper opcode and first, second and third parameters fully consistent with the previously generated execution pre-conditions. First and second number elements (making up the first and second matrices, respectively) may need to be sequentially loaded in corresponding vector registers following a particular order suitable for the algorithm according to which the matrix multiplication is implemented. This is also a well-known matter in the technical field at hand, so no details thereon are provided herein.

Matrix-multiplication systems 100 may comprise a length module 101, a decoding module 102, a bitwidth module 103, a dimension module 104 and a multiplication module 105.

The length module 101 may be configured to obtain or retrieve, in runtime, the vector length 108 from the first Control Register 114. The vector length 108 may have been inputted in the first Control Register 114 via pertinent instruction(s) in the application program before the call to the matrix-multiplication instruction. The decoding module 102 may be configured to decode, in runtime, the (called) matrix-multiplication instruction to extract therefrom the opcode 106 and, therefore, the type of the multiplication to be performed 107. The call to the matrix-multiplication instruction may be performed once, as described before, necessary consistent execution pre-conditions have been created by the running application program.

The bitwidth module 103 may be configured to determine, in runtime, the first and second bitwidths 109 depending on the previously determined type of multiplication to be performed 107. The dimension module 104 may be configured to determine, in runtime, value of M, value of N and value of K depending on the previously determined vector length 108 and first and second bitwidths 109. And the multiplication module 105 may be configured to perform, in runtime, the multiplication of the first and second matrices taking into account the first, second and third matrix parameters 111, the first and second bitwidths 109 and the value of M, N and K 110.

The values of M, K and N (i.e., matrix dimensions) 110 may depend on the vector length 108 and the first and second bitwidths 109 (i.e., the bitwidth of the first and second number elements making up the first and second matrices, respectively). For example, if vector lengths from 64 bits to 16384 bits are supported, the values of M, K and N may be those indicated in following **Table 1,** wherein VLEN is the vector length 108.

| | **16-bit** | | | **8-bit** | | | **4-bit** | | |
|---|---|---|---|---|---|---|---|---|---|
| **VLEN** | **M** | **K** | **N** | **M** | **K** | **N** | **M** | **K** | **N** |
| 64 | 4 | 4 | 8 | 4 | 8 | 8 | 4 | 16 | 8 |
| 128 | 4 | 4 | 16 | 4 | 8 | 16 | 4 | 16 | 16 |
| 256 | 8 | 8 | 16 | 8 | 16 | 16 | 8 | 32 | 16 |
| 512 | 8 | 8 | 32 | 8 | 16 | 32 | 8 | 32 | 32 |
| 1024 | 16 | 16 | 32 | 16 | 32 | 32 | 16 | 64 | 32 |
| 2048 | 16 | 16 | 64 | 16 | 32 | 64 | 16 | 64 | 64 |
| 4096 | 32 | 32 | 64 | 32 | 64 | 64 | 32 | 128 | 64 |
| 8192 | 32 | 32 | 128 | 32 | 64 | 128 | 32 | 128 | 128 |
| 16384 | 64 | 64 | 128 | 64 | 128 | 128 | 64 | 256 | 128 |
| **Table 1:** Dimensions of first, second and third matrices for different values of vector length 108. | | | | | | | | | |

In the case that number of different opcodes 106 defined or to be defined exceeds the available instruction-formats' opcode capacity in the processor architecture employed, full or part of second Control Register (sCR) 115 may be used to define an extended range of different opcodes. In RISC-V implementations, this second Control Register 115 may be, e.g., the vector type register (vtype) of the RISC-V architecture.

For example, following **Table 2** shows possible combinations of instruction-format and sCR-parts encoding an expanded range of opcodes, wherein vd is the third matrix parameter, vs1 is the first matrix parameter, vs2 is the second matrix parameter, FP16 is 16-bits floating-point, FP32 is 32-bits floating point, BF16 is 16-bits brain floating point, INT16 is 16-bits signed integer, INT32 is 32-bits signed integer, UINT16 is 16-bits unsigned integer, UINT32 is 32-bits unsigned integer, INT8 is 8-bits signed integer, UINT8 is 8-bits unsigned integer, INT4 is 4-bits signed integer and UINT4 is 4-bits unsigned integer.

| **Instruction-name or Instruction-format** | **sCR-part1** | **sCR-part2** | **First number elements** | **Second number elements** | **Third number elements** |
|---|---|---|---|---|---|
| vfmxm vd, vs1, vs2 | 16 | 0 | FP16 | FP16 | FP32 |
| vfmxm vd, vs1, vs2 | 16 | 1 | BF16 | BF16 | FP32 |
| vmxm vd, vs1, vs2 | 16 | Ignore | INT16 | INT16 | INT32 |
| vmxmu vd, vs1, vs2 | 16 | Ignore | UINT16 | UINT16 | UINT32 |
| vmxmsu vd, vs1, vs2 | 16 | Ignore | INT16 | UINT16 | INT32 |
| vmxm vd, vs1, vs2 | 8 | Ignore | INT8 | INT8 | INT32 |
| vmxmu vd, vs1, vs2 | 8 | Ignore | UINT8 | UINT8 | UINT32 |
| vmxmsu vd, vs1, vs2 | 8 | Ignore | INT8 | UINT8 | INT32 |
| vmxm4 vd, vs1, vs2 | Ignore | Ignore | INT4 | INT4 | INT32 |
| vmxmu4 vd, vs1, vs2 | Ignore | Ignore | UINT4 | UINT4 | UINT32 |
| vmxmsu4 vd, vs1, vs2 | Ignore | Ignore | INT4 | UINT4 | INT32 |
| **Table 2:** Different variants of the matrix multiplication instruction each corresponding to a particular opcode. | | | | | |

In RISC-V implementations with vtype acting as the second Control Register 115, vtype[5:3] may be the **sCR-part1** whose 3-bits content may, e.g., indicate whether the first and second bitwidths 109 are of 16 bits or of 8 bits, and/or vtype[10] may be the **sCR-part2** whose 1-bit content may, e.g., indicate whether the first and the second number elements are BF16 or FP16. In these implementations, the needed execution pre-conditions to enable the performing of the matrix-multiplication instruction (described in other parts of the disclosure) may further include providing the **sCR-part1** and the **sCR-part2** with proper content according to, e.g., **Table 2.**

In the particular case of **instruction-format** = "vfmxm vd, vs1, vs2", **sCR-part1** = 16 and **sCR-part2** = 0 (first row of **Table 2**), said combination corresponds to a type of matrix multiplication in which first matrix and second matrix are made up of FP16 number elements and result third matrix is made up of FP32 number elements. In the particular case of **instruction-format** = "vmxmsu4 vd, vs1, vs2" (last row of **Table 2**), **sCR-part1** and **sCR-part2** are not used to encode corresponding opcode, but **instruction-format** = "vmxmsu4 vd, vs1, vs2" alone designates a type of matrix multiplication in which first matrix is made up of INT4 number elements, second matrix is made up of UINT4 number elements and result third matrix is made up of INT32 number elements.

Knowing the first, second and third matrix parameters 111, the first and second bitwidths 109 and the value of M, N and K 110, the multiplication module 105 may address/access each of the first number elements making up the first matrix, each of the second number elements making up the second matrix, and each of the third number elements making up the result third matrix. Said addressing of the first, second and third number elements may be programmed, e.g., in indexed or index-based manner. Following **Source code 1** represents one of many possible software-based implementations of the performing of the matrix multiplication, which is based on a "three nested FOR-sentences" approach with index-based addressing of the first, second and third number elements.

| |
|---|
| template <typename TA, typename TB, typename TC> |
| void vmxm(int8_t vs1, int8_t vs2, int8_t vd) { |
| TA *A = (TA*)VRF[vs1]; |
| TB *B = (TB*)VRF[vs2]; |
| TC *C = (TC*)VRF[vd]; |
| // Determine M, K and N based on VLEN and size of data type |
| int64_t M, N, K; |
| get_dimensions<TA, false>(M, N, K); |
| for (int64_t i = 0; i < M; i++) { |
| for (int64_t j = 0; j < N; j++) { |
| TC c = C[i * N + j]; // Read C[i][j] |
| for (int64_t k = 0; k < K; k++) { |
| TA a = A[i * K + k]; // Read A[i][k] |
| TB b = B[k * N + j]; // Read B[k][j] |
| c = a * b + c; // MAC |
| } |
| C[i * N + j] = c; // Write C[i][j] |
| } |
| } |
| } |
| **Source code 1:** Different variants of the matrix multiplication instruction each corresponding to a particular opcode. |

In this **Source code 1:**
- A is the first matrix, B is the second matrix and C is the result third matrix;
- outermost FOR and index i are dedicated to traverse dimension M, intermediate FOR and index j are dedicated to traverse dimension N, and innermost FOR and index k are dedicated to traverse dimension K;
- get_dimensions function is dedicated to determine the matrix dimensions M, N and K, details on whose calculation are provided in other parts of the description;
- the particular matrix-multiplication method implemented corresponds to one of the sub-matrix multiplication cumulative methods details on which are provided in other parts of the disclosure.

Regarding determination of matrix dimensions M, K and N 110, values of M and N may be determined only depending on the vector length 108 according to, e.g., criteria in **Table 1,** and K may be determined depending on the vector length 108 and furthermore the first and second bitwidths 109. In particular, K may be determined by establishing a working-bitwidth of 16 bits, determining a working-K depending on the vector length 108 and the working-bitwidth (of 16 bits) according to, e.g., criteria in **Table 1,** and determining K depending on the working-K and the first and second bitwidths 109. Specifically, K may be determined equal to the working-K if the first and second bitwidths 109 are of 16 bits, or equal to the working-K multiplied by 2 if the first and second bitwidths 109 are of 8 bits, or equal to the working-K multiplied by 4 if the first and second bitwidths 109 are of 4 bits.

The processor 116 may support an address-function of addressing or handling bit packets of 8 or 16 or 32 bits but not of 4 bits in the vector registers 112 (e.g., index-based address-function in **Source code 1**). This is the case of, e.g., RISC-V architecture. If the first, second and third bitwidths 109 are of 8 or 16 or 32 bits, the first, second and third number elements may be directly addressed or handled using said address-function. Otherwise, if some of the bitwidths 109 is/are of 4 bits, each of the 4-bits number elements may be addressed/handled by, firstly, addressing 8-bits packet containing it using the address-function and, secondly, identifying 4 MSBs (Most Significant Bits) or 4 LSBs (Less Significant Bits) in the addressed 8-bits packet as the 4-bits number element to be processed to perform the matrix multiplication.

In examples, the first matrix may be a sub-matrix of a first full-matrix splitable into various sub-matrices including said first sub-matrix, and the second matrix may be a sub-matrix of a second full-matrix splitable into various sub-matrices including said second sub-matrix, in which case matrix-multiplication methods may support cumulative sub-matrix multiplication. To implement said support, matrix-multiplication methods may further include accumulating, in runtime, the multiplication of the first and second sub-matrices in the third matrix as partial result of multiplying the first and second full-matrices. This manner, the multiplication of the first and second full-matrices is performable by executing one of such cumulative sub-matrix multiplication methods as many times as required depending on the various sub-matrices into which the first and second full-matrices are splitable. The particular implementation represented by **Source code 1** supports cumulative sub-matrix multiplication because it computes C = A * B + C (instead of solely C = A * B), wherein A is the first sub-matrix, B is the second sub-matrix, C at the right of the equal sign is the partial multiplication of the first and second full-matrices accumulated just before current execution, and C at the left of the equal sign is the partial multiplication of the first and second full-matrices accumulated at termination of current execution (of the cumulative sub-matrix multiplication method).

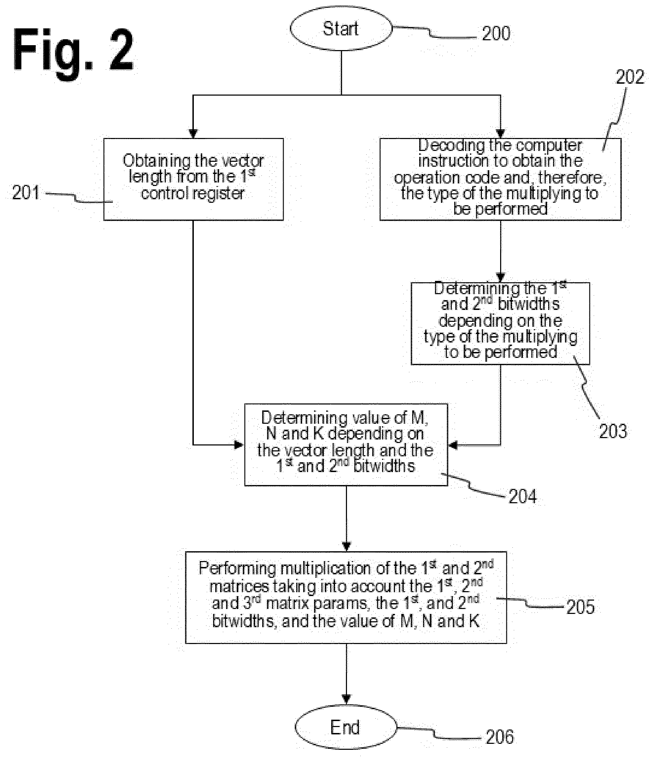

Figure 2 is a flow chart schematically illustrating computer-implemented methods of performing a computer instruction of multiplying first matrix and second matrix, according to examples. Since such matrix-multiplication methods are performable by matrix-multiplication systems according to Figure 1, number references from said Figure 1 may be reused in following description of Figure 2. Same or similar functional and operational principles and aspects as those explained with reference to Figure 1 may thus be attributable to matrix-multiplication methods according to Figure 2 with a difference that Figure 1 represent such principles and aspects from (matrix-multiplication) system perspective, whereas Figure 2 represents them from (matrix-multiplication) method or process flow perspective. Figure 2 illustrates method steps or actions logically connected with arrows denoting execution succession thereof from (matrix-multiplication) method/process flow point of view. Such execution successions illustrated in Figure 2 follow particular orders of execution, respectively, but other logical orders of execution are possible whenever satisfaction of pre- and post-conditions of each involved method step/action are respected.

As shown in Figure 2, matrix-multiplication methods may be initiated (e.g., at block 200) in response to, e.g., a call invoking a matrix-multiplication instruction included in an application program that is being executed in/by the processor 116. Considerations regarding matrix-multiplication instruction and application program set out previously with respect to Figure 1 are also of application to this description of Figure 2. Matrix-multiplication methods may include (e.g., at block 201) obtaining, in runtime, the vector length from the first Control Register 114. This obtaining functionality implementable at/by, e.g., method-block 201 may be performed by, e.g., the length module 101 previously described with reference to Figure 1. Functional details and considerations explained about said module 101 may thus be similarly attributed to method block 201.

Matrix-multiplication methods may further include (e.g., at block 202) decoding, in runtime, the computer instruction to obtain the operation code 106 codified therein and, therefore, the type of the multiplying to be performed 107. This decoding functionality implementable at/by, e.g., method-block 202 may be performed by, e.g., the decoding module 102 previously described with reference to Figure 1. Functional details and considerations explained about said module 102 may thus be similarly attributed to method block 202.

Matrix-multiplication methods may still further include (e.g., at block 203) determining, in runtime, the first and second bitwidths 109 depending on the obtained type of the multiplying to be performed 107. This bitwidth functionality implementable at/by, e.g., method-block 203 may be performed by, e.g., the bitwidth module 103 previously described with reference to Figure 1. Functional details and considerations explained about said module 103 may thus be similarly attributed to method block 203.

Matrix-multiplication methods may yet further include (e.g., at block 204) determining, in runtime, value of M, N and K 110 depending on the obtained vector length 108 and the determined first and second bitwidths 109. This matrix-dimension functionality implementable at/by, e.g., method-block 204 may be performed by, e.g., the dimension module 104 previously described with reference to Figure 1. Functional details and considerations explained about said module 104 may thus be similarly attributed to method block 204.

Matrix-multiplication methods may furthermore include (e.g., at block 205) performing, in runtime, multiplication of the first and second matrices taking into account the first, second and third matrix parameters 111, the determined first and second bitwidths 109, and the determined value of M, N and K 110. This matrix-multiplication functionality implementable at/by, e.g., method-block 205 may be performed by, e.g., the multiplication module 105 previously described with reference to Figure 1. Functional details and considerations explained about said module 105 may thus be similarly attributed to method block 205.

Matrix-multiplication methods may terminate (e.g., at block 206) by performing, in runtime, a store (i.e., transfer from vector registers 112 to memory) of the third matrix, i.e., the result of the matrix multiplication, in such a manner that the running application program may have the third matrix available in memory to handle it as programmed in the application program.

As used herein, the term "module" may be understood to refer to software, firmware, hardware and/or various combinations thereof. It is noted that the modules are exemplary. The modules may be combined, integrated, separated, and/or duplicated to support various applications. Also, a function described herein as being performed by a particular module may be performed by one or more other modules and/or by one or more other devices instead of or in addition to the function performed by the described particular module.

The modules may be implemented across multiple devices, associated or linked to corresponding matrix-multiplication methods/systems proposed herein, and/or to other components that may be local or remote to one another. Additionally, the modules may be moved from one device and added to another device, and/or may be included in both devices, associated to corresponding matrix-multiplication methods/systems proposed herein. Any software implementations may be tangibly embodied in one or more storage media such as, e.g., a memory device, a floppy disk, a compact disk (CD), a digital versatile disk (DVD), or other devices that may store computer code.

The matrix-multiplication systems according to present disclosure may be implemented by computing means, electronic means or a combination thereof. The computing means may be a set of instructions (e.g., a computer program) and then the matrix-multiplication systems may use a memory and a processor, embodying said set of instructions stored in the memory and executable by the processor. These instructions may comprise functionality or functionalities to execute corresponding matrix-multiplication methods such as e.g. the ones described in other parts of the disclosure.

In case the matrix-multiplication systems are implemented only by electronic means, a controller of the matrix-multiplication system may be, for example, a CPLD (Complex Programmable Logic Device), an FPGA (Field Programmable Gate Array) or an ASIC (Application-Specific Integrated Circuit).

In case the matrix-multiplication systems are a combination of electronic and computing means, the computing means may be a set of instructions (e.g., a computer program) and the electronic means may be any electronic circuit capable of implementing corresponding method-steps of the matrix-multiplication methods proposed herein, such as those described in other parts of the disclosure.

The computer program(s) may be embodied on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing matrix-multiplication methods according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program(s) is/are embodied in a signal that may be conveyed directly by a cable or other device or means, the carrier may be constituted by such cable or other device or means. Alternatively, the carrier may be an integrated circuit in which the computer program(s) is/are embedded, the integrated circuit being adapted for performing, or for use in the performance of, matrix-multiplication methods proposed herein.

Although only a number of examples have been disclosed herein, other alternatives, modifications, uses and/or equivalents thereof are possible. Furthermore, all possible combinations of the described examples are also covered. Thus, the scope of present disclosure should not be limited by particular examples but it should be determined only by a fair reading of the claims that follow.

## Claims

1. Computer-implemented method of performing a computer instruction of multiplying first matrix and second matrix in a processor having an architecture including a set or array of vector registers and a first control register, each of the vector registers having a vector length indicated in the first control register; wherein
the first matrix is made up of first numerical elements with first bitwidth arranged in M rows and K columns, the second matrix is made up of second numerical elements with second bitwidth arranged in K rows and N columns, and a third matrix resulting from the multiplying of the first and second matrices is made up of third numerical elements with third bitwidth arranged in M rows and N columns; wherein
the computer instruction codifies an operation code indicating a type of the multiplying to be performed and has following parameters: first matrix parameter indicating in which vector registers the first numerical elements are sequentially stored, second matrix parameter indicating in which vector registers the second numerical elements are sequentially stored, and third matrix parameter indicating in which vector registers the third numerical elements are or are to be sequentially stored; and wherein the computer-implemented method comprises:
obtaining, in runtime, the vector length from the first control register;
decoding, in runtime, the computer instruction to obtain the operation code codified therein and, therefore, the type of the multiplying to be performed;
determining, in runtime, the first and second bitwidths depending on the obtained type of the multiplying to be performed;
determining, in runtime, value of M, value of N and value of K depending on the obtained vector length and the determined first and second bitwidths; and
performing, in runtime, multiplication of the first and second matrices taking into account the first matrix parameter, the second matrix parameter, the third matrix parameter, the determined first and second bitwidths, and the determined value of M, value of N and value of K.

2. Computer-implemented method of performing a computer instruction of multiplying first and second matrices according to claim 1, wherein the architecture further includes a second control register, and the operation code indicating the type of the multiplying to be performed is coded in the computer instruction along with part or full content of the second control register; and wherein the decoding of the computer instruction comprises:
decoding, in runtime, the computer instruction along with the part or full content of
the second control register to obtain the operation code codified therein and, therefore, the type of the multiplying to be performed.

3. Computer-implemented method of performing a computer instruction of multiplying first and second matrices according to any of claims 1 or 2, wherein
the first matrix parameter indicates a first initial vector register of a first series of contiguous vector registers in which the first numerical elements are sequentially stored starting from said first initial vector register, and
the second matrix parameter indicates a second initial vector register of a second series of contiguous vector registers in which the second numerical elements are sequentially stored starting from said second initial vector register, and
the third matrix parameter indicates a third initial vector register of a third series of contiguous vector registers in which the third numerical elements are or are to be sequentially stored starting from said third initial vector register.

4. Computer-implemented method of performing a computer instruction of multiplying first and second matrices according to any of claims 1 to 3, wherein the third bitwidth is of 32 bits corresponding to one of following numerical representations depending on the obtained type of the multiplying to be performed: 32 bits floating point, FP32, 32 bits signed integer, INT32, 32 bits unsigned integer, UINT32.

5. Computer-implemented method of performing a computer instruction of multiplying first and second matrices according to any of claims 1 to 4, wherein the determining of the value of M, the value of N and the value of K comprises:
determining, in runtime, the value of M and the value of N only depending on the obtained vector length, and the value of K depending on the obtained vector length and furthermore the determined first and second bitwidths.

6. Computer-implemented method of performing a computer instruction of multiplying first and second matrices according to any of claims 1 to 5, wherein the first and second bitwidths are same bitwidth equal to 4 bits or equal to 8 bits or equal to 16 bits depending on the obtained type of the multiplying to be performed.

7. Computer-implemented method of performing a computer instruction of multiplying first and second matrices according to claims 5 and 6, wherein the determining of the value of K depending on the obtained vector length and the determined first and second bitwidths comprises:
establishing, in runtime, a working bitwidth of 16 bits;
determining, in runtime, a working K depending on the obtained vector length and the established working bitwidth; and
determining, in runtime, the value of K depending on the determined working K and the determined first and second bitwidths.

8. Computer-implemented method of performing a computer instruction of multiplying first and second matrices according to claim 7, wherein the determining of the value of K depending on the determined working K and the determined first and second bitwidths comprises:
determining, in runtime, the value of K equal to the determined working K if the determined first and second bitwidths are of 16 bits, or equal to the determined working K multiplied by 2 if the determined first and second bitwidths are of 8 bits, or equal to the determined working K multiplied by 4 if the determined first and second bitwidths are of 4 bits.

9. Computer-implemented method of performing a computer instruction of multiplying first and second matrices according to any of claims 6 to 8, wherein the processor supports a function of addressing or handling bit packets of 8 bits or of 16 bits but not of 4 bits in the vector registers; and wherein the performing of the multiplication of the first and second matrices comprises:
accessing, in runtime, the first and second numerical elements to be processed to perform the multiplication through the addressing function in direct mode if the first and second bitwidths are of 8 bits or of 16 bits, or in indirect mode if the first and second bitwidths are of 4 bits, wherein
direct mode includes using, for each of the numerical elements of 8 bits or of 16 bits to be processed, the addressing function to access it with no access-related post-processing thereof, and
indirect mode includes using, for each of the numerical elements of 4 bits to be processed, the addressing function to access bit packet of 8 bits including it along with access-related post-processing of the accessed bit packet of 8 bits to identify the 4 most significant bits or 4 less significant bits therein as the numerical element of 4 bits to be processed.

10. Computer-implemented method of performing a computer instruction of multiplying first and second matrices according to any of claims 6 to 9, wherein in case of the first and second bitwidths are of 16 bits, said 16 bits correspond to one of following numerical representations depending on the obtained type of the multiplying to be performed:
• 16 bits floating point, FP16, for both the first numerical elements and the second numerical elements;
• 16 bits brain floating point, BF16, for both the first numerical elements and the second numerical elements;
• 16 bits signed integer, INT16, for both the first numerical elements and the second numerical elements;
• 16 bits unsigned integer, UINT16, for both the first numerical elements and the second numerical elements;
• 16 bits signed integer, INT16, for the first numerical elements and 16 bits unsigned integer, UINT16, for the second numerical elements.

11. Computer-implemented method of performing a computer instruction of multiplying first and second matrices according to any of claims 6 to 10, wherein in case of the first and second bitwidths are of 8 bits, said 8 bits correspond to one of following numerical representations depending on the obtained type of the multiplying to be performed:
• 8 bits signed integer, INT8, for both the first numerical elements and the second numerical elements;
• 8 bits unsigned integer, UINT8, for both the first numerical elements and the second numerical elements;
• 8 bits signed integer, INT8, for the first numerical elements and 8 bits unsigned integer, UINT8, for the second numerical elements.

12. Computer-implemented method of performing a computer instruction of multiplying first and second matrices according to any of claims 6 to 11, wherein in case of the first and second bitwidths are of 4 bits, said 4 bits correspond to one of following numerical representations depending on the obtained type of the multiplying to be performed:
• 4 bits signed integer, INT4, for both the first numerical elements and the second numerical elements;
• 4 bits unsigned integer, UINT4, for both the first numerical elements and the second numerical elements;
• 4 bits signed integer, INT4, for the first numerical elements and 4 bits unsigned integer, UINT4, for the second numerical elements.

13. Computer-implemented method of performing a computer instruction of multiplying first and second matrices according to any of claims 1 to 12, wherein the first matrix is a sub-matrix of a first full matrix made up of various sub-matrices including said first sub-matrix, and the second matrix is a sub-matrix of a second full matrix made up of various sub-matrices including said second sub-matrix; and wherein
the performing of the multiplication of the first and second matrices taking into account the first matrix parameter, the second matrix parameter, the third matrix parameter, the determined first and second bitwidths, and the determined value of M, value of N and value of K further comprises:
accumulating, in runtime, the multiplication of the first and second sub-matrices in the third matrix as partial result of multiplying the first full matrix and the second full matrix, so that said multiplication of the first and second full matrices is performable by executing this method taking into account the various sub-matrices making up the first and second full matrices.

14. Computer program comprising computer program code means adapted to perform all the steps of the method according to any of claims 1-13 when said program is run on a computer system.

15. Matrix-multiplication system for performing a computer instruction of multiplying first matrix and second matrix in a processor having an architecture including a set or array of vector registers and a first control register, each of the vector registers having a vector length indicated in the first control register; wherein
the first matrix is made up of first numerical elements with first bitwidth arranged in M rows and K columns, the second matrix is made up of second numerical elements with second bitwidth arranged in K rows and N columns, and a third matrix resulting from the multiplying of the first and second matrices is made up of third numerical elements with third bitwidth arranged in M rows and N columns; wherein
the computer instruction codifies an operation code indicating a type of the multiplying to be performed and has following parameters: first matrix parameter indicating in which vector registers the first numerical elements are sequentially stored, second matrix parameter indicating in which vector registers the second numerical elements are sequentially stored, and third matrix parameter indicating in which vector registers the third numerical elements are or are to be sequentially stored; and wherein the matrix-multiplication system comprises:
a length module configured to obtain, in runtime, the vector length from the first control register;
a decoding module configured to decode, in runtime, the computer instruction to obtain the operation code codified therein and, therefore, the type of the multiplying to be performed;
a bitwidth module configured to determine, in runtime, the first and second bitwidths depending on the obtained type of the multiplying to be performed;
a dimension module configured to determine, in runtime, value of M, value of N and value of K depending on the obtained vector length and the determined first and second bitwidths; and
a multiplication module configured to perform, in runtime, multiplication of the first and second matrices taking into account the first matrix parameter, the second matrix parameter, the third matrix parameter, the determined first and second bitwidths, and the determined value of M, value of N and value of K.
